# EUROPEAN PATENT APPLICATION

(11) **EP 4 524 871 A1**
(43) Date of publication of application: **19.03.2025**
(21) Application number: 24200587.4
(22) Date of filing: 16.09.2024
(51) Int. Cl.: G06Q 90/00, G06F 3/01, G06F 3/00, G06V 20/20

(54) **A DEVICE FOR PRESENTING AND VISUALIZING OBJECTS, A METHOD FOR PRESENTING AND VISUALIZING OBJECTS AND OBTAINING DATA ON CUSTOMER BEHAVIOR AND PREFERENCES**

(30) Priority: 18.09.2023 PL 44614323
(71) Applicant: Digi Progress Sp.z o.o., Rzeszów (PL)
(72) Inventor: KORDOS, Damian, 35-330 Rzeszów (PL); KORDOS, Adrian, 35-601 Rzeszów (PL); KOZIO , Lucjan, 39-320 PRZEC AW (PL); WIELOPOLSKI, Grzegorz, 39-120 S DZISZÓW MA OPOLSKI (PL)
(74) Representative: Tyrala, Magdalena

(57) **Abstract**

A device for the presentation and visualization of objects comprising at least one display (1) designed to accommodate one or more objects (3); at least one control system comprising a microcontroller/computer/logical unit (5), with implemented software (11), to which at least one sensor (4A) for the interaction of a customer with the displayed objects (3) and at least one display (6) are connected, is characterized in that it comprises a system for detecting the presence and position of objects (3) in the display (1) implemented by a marker (16) of the object (3) - sensor (4B) system connected to the control system (5) for recognizing the object (3) and/or a sensor for detecting a characteristic feature of each of the objects and/or a vision system comprising a camera or cameras oriented towards the display (1) containing the objects (3). A method for presenting and visualizing objects a) placing one or more objects (3) on one or more displays (1), b) detecting at least one interaction of a person (2) with the object (3), c) transmitting information about the interactions of the person (2) with the object (3) to a control system (5), d) processing information about the interactions of the person (2) with the object (3) in the control system by software (11), e) visualizing the processed information on a display (6), f) storing information about the interactions of the person (2) with the object (3) in a database.

## Description

The subject of the invention is a display unit, that is a device for presenting and visualizing objects, e.g. goods or their samples, miniatures, etc., comprising an object display and a display. The subject of the invention is also a method for presenting and visualizing objects and a method for obtaining data on customer behavior and preferences using this device.

In the state of the art, static displays presenting goods or their samples are known. The usefulness of such displays is significantly limited. A potential customer, in order to match products to themselves, must physically grab them and compare them. And in the case of samples, the end result of using the products can only be generated in the customer's imagination.

There are also known displays in the form of screens that display the image of the product and information about it, such as size, weight, availability, suggestions for use or arrangement, which are basically electronic product catalogs. The usefulness of these displays is also limited. The final effect of the product or use of the product is also unknown in this case and requires the use of the imagination of the person or customer.

The above-mentioned displays, known from the state of the art, do not enable obtaining data on the product preferences of potential buyers.

Known systems are only able to provide the customer with a limited amount of information, while obtaining more information about the product requires customer activity, e.g. bringing the product close to the reader with a display, scanning a code with a smartphone, or in the case of a screen display, using a multi-level menu.

From the description of the European patent EP3005327A2 there is known a product presenter having at least one shelf configured to directly support at least one product and a control circuit configured to monitor the interaction of at least one person with the at least one product. The presenter may include a display configured to provide visual content to at least one person while viewing the product. The prior art device enables obtaining information about the customer's actions and preferences, which data may then be used in marketing the products . It is likely that the display is used to present product and promotional data, however the description does not disclose other applications and functions of the display.

The purpose of the device according to the invention is to provide a display that would eliminate the disadvantages indicated in the prior art. The purpose of the invention is also to provide a device that would provide the person with the maximum amount of information about the product without additional activities and would also enable visualization of the product in a previously set arrangement. The purpose of the invention is to develop a method of optimal presentation of the product while simultaneously obtaining information about the person's choices and preferences.

The essence of the invention is a device for the presentation and visualization of objects comprising at least one display intended for placing one or more objects on it; at least one control system comprising a microcontroller and/or a computer and/or a logic unit, with implemented software, to which at least one sensor for the interaction of the customer with the exhibited objects and at least one display are connected. The device is characterized in that it comprises a system for detecting the presence and position of objects in the display implemented by an object marker system connected to the control system - a sensor recognizing the object and/or a vision system comprising a camera oriented towards the display containing objects and/or a sensor detecting a characteristic feature of each of the objects.

Preferably, the same sensor detects a person's interaction with the object and the presence and position of the object on the display.

Preferably, the control system includes implemented software for analyzing customer interest and/or visualizing information about or related to one or more objects indicated by a sensor detecting customer interaction with the exhibited objects and/or an object-sensor system recognizing the object and displaying this information on one or more displays and/or other information and visualizations related to the object.

Advantageously, the device additionally comprises a system for visual recognition of a person approaching the display comprising a camera and software implemented in the control system, wherein the software comprises a database structure of information associated with the recognized person.

Preferably, the device includes an auxiliary touch screen connected to the control system. Preferably, the device includes a microphone connected to the control system.

Preferably, the device includes a communications module connected to the control system. Preferably, the device includes an object backlight connected to a control system. Advantageously, the object marker-obj ect recognition sensor system is implemented by a visual code placed on the object and an optical code reader placed on the display.

Preferably, the object-sensor system recognizing the object is implemented by a radio tag placed on the object and a radio tag reader placed on or in the display.

Preferably, the object-sensor arrangement for recognizing the object is implemented by a color sensor placed on or in the display.

Preferably, the object-sensor system recognizing the object is implemented by a magnetic tag placed on the object and a magnetic field sensor or meter placed on or in the display. Preferably, the object-sensor system recognizing the object is implemented by a digital or analog circuit containing contacts placed on the object and on or in the display.

The essence of the invention is also a method of presenting and visualizing objects and obtaining data on the behavior and preferences of customers, carried out using a device for presenting and visualizing objects, comprising at least one display intended for placing one or more objects on it; at least one control system comprising a microcontroller and/or a microcontroller and/or a logical unit, with implemented software, to which at least one sensor detecting the interaction of the customer with the exhibited objects is connected, and at least one display, wherein the device comprises a system for detecting the presence and position of objects in the display, carried out by an object-sensor system connected to the control system that recognizes the object and/or a vision system comprising a camera oriented towards the display containing objects and/or a sensor detecting a characteristic feature of each of the objects, and in that the device performs the following steps:
a) placing one or more objects on one or more displays,
b) detection of at least one person-object interaction,
c) transferring information about the person's interactions with the object to the control system,
d) processing information about the interactions of a person with an object in the control system by software,
e) visualization of processed information on a display or multiple displays,
f) saving information about a person's interactions with an object in a database,

Advantageously, the method is carried out by a device that additionally includes a system for visual recognition of a person approaching the display, comprising a camera and software implemented on a computer/microcontroller/controller, wherein the software includes a database of information associated with the recognized person and includes the steps of:
b1) recognition of a person approaching the display,
d1) processing information about a person and their interaction with an object in the control system by software,
e1) visualization of processed information on a personalized display or multiple displays based on previously recorded person activity,
f1) saving information about a person and their interaction with an object in a database,

Preferably, the method is performed by a device that includes a touch-sensitive auxiliary screen and/or a microphone and comprises the following steps:
b2) detecting additional interaction of a person with the auxiliary screen and/or microphone,
c1) transferring information about the person's interaction to the control system,
d2) processing information about the person's interactions with the auxiliary screen and/or microphone (8) in the control system by software,
e1) visualization of processed information on the display,
e2) visualization of processed information on the touch display.

Preferably, the method is carried out by a device that includes a system for illuminating/indicating exposed objects and comprises the following steps:
e 3) based on the processed information, highlighting or indicating appropriate objects.

The key advantage of the invention is the ability to automatically recognize which of the exhibited objects, e.g. samples, is currently of interest to the customer. A distinctive feature is the fact that the display works correctly even when the exhibition is not permanently placed, and individual exhibited objects can be freely swapped, e.g. as a result of the customer viewing them.

The fundamental feature that distinguishes the proposed solutions from the existing interactive ones is the fact that the basic functionality does not require additional actions from the person, apart from those typical for non-interactive classic displays, which translates into increased comfort of use and does not require additional knowledge in the field of operation - interaction takes place by, for example, tilting the presented product or sample or extending it, or by touching or approaching the hand or by another type of fixation on the presented product or sample, decor, etc. The basic functionalities of the display, enabling even advanced visualizations, are fully intuitive and do not require any instructions for use. The remaining most advanced functionalities require additional activity from the person, but are intuitive for people familiar with modern user technology, e.g. smartphones, computers.

Unlike currently used displays, the submitted invention automatically detects both the arrangement of individual objects displayed on the display, as well as the object that is the subject of the customer's current interest, as well as the place in the display where it is located. All this without the need for the customer to perform additional actions not directly related to viewing the displayed objects. Unlike generally used solutions, there is no need to bring them closer to scanners, readers, etc.

The device provides precise statistical data, which will enable, for example, management of the logistics chain, planning of marketing campaigns, as well as management of the display in order to increase customer interest in both the entire display and the promotion of individual products.

A significant advantage of the invention is the ability to automatically recognize which of the exhibited objects, products or samples is currently of interest to the customer. A distinctive feature is the fact that the display works correctly even when the exhibition is not permanently placed, and individual exhibited objects can be freely swapped, e.g. as a result of the customer viewing them.

The invention provides visualization in a given arrangement of objects, products or samples with which a person interacts, e.g. by touch, moving, sliding, etc. The person has the ability to see in real time how a given object will look in the arrangement on its own or in combination with other objects. However, knowledge of using graphic programs or design programs is not required.

The invention is shown in the drawing, where:
Fig. 1 shows a schematic layout of the device according to the invention,
Fig. 2 shows an example arrangement of sensors on the device in an isometric view from below,
Fig. 3 shows an example arrangement of sensors on the device in an isometric front view,
Fig. 4 shows a view of an example of a device according to the invention and an example of a person's interaction with the device consisting in sliding the product out of the display,
Fig. 5 shows a view of an example of a device according to the invention and the interaction of a person with the device by touching the product located on the display,
Fig. 6 shows a view of an example of a device according to the invention and the interaction of a person with the device by looking at the product located on the display,
Fig. 7 shows a view of an example of the device according to the invention and the interaction of a person with the device by tilting towards a product located on the display.

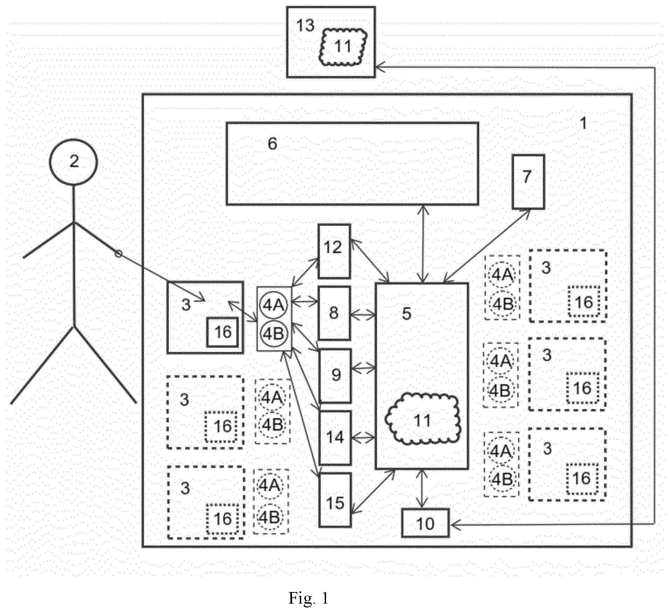

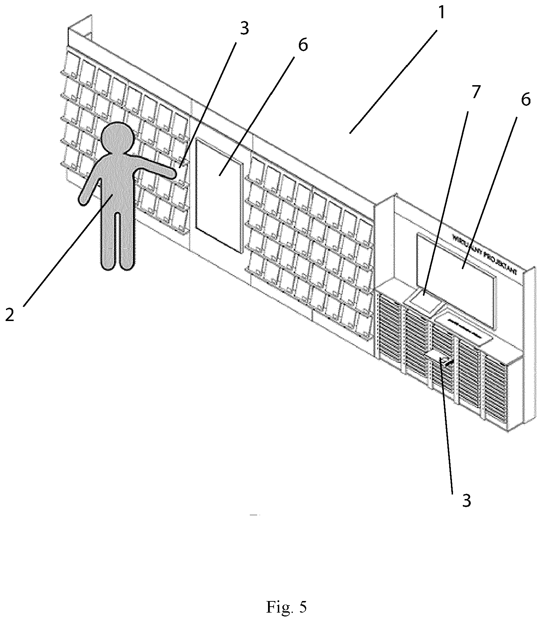

A schematic example of the device is shown in Fig. 1. The device consists of a display 1, on which there are objects 3 with sensors 4A and 4B. 4A is a sensor detecting the interaction of a person with the displayed objects. 4B is a sensor recognizing the object. The device further comprises a microcontroller 5, at least one display 6, which does not have to be physically integrated with the display. The microcontroller has implemented software 11. Optionally, the device comprises an auxiliary screen 7 and/or a microphone 8 and /or a graphic code reader 9. The device may comprise one or more RFID tag readers 15. The display 1 may have any required shape, e.g. rectangular. Objects 3 are placed on the display 1, e.g. products, samples, samples. The objects are placed on the display in any known way. For example, they are placed on shelves, drawers, fans (Fig. 5-7). The objects comprise or are associated with sensors 4A and 4B. Sensors 4A and 4B may be, for example, motion sensors, touch sensors, optical proximity sensors, gesture sensors, magnetic field sensors, RFID reader, color sensors, vision system. Sensors 4A and 4B are connected by signal to microcontroller 5, which may be a computer, or a logical unit or a distributed control system. Sensor 4A may act as sensor 4B, in which case only 4A is physically used. Signals or information from sensors 4A and 4B are processed in microcontroller 5 based on programmed algorithm 11, and then the processed data are sent to display screen 6, where they are presented in the form of appropriate information, such as, for example: visualizations using the object with which interaction has taken place by person 2, additional information and parameters of this object, etc.

The device may contain one or more identical or different displays 1. It may constitute a so-called modular system enabling expansion depending on the needs.

In addition to the interaction of the person/customer, the device also detects the presence and location of individual objects on the display. This is achieved by using different types of sensors, which can also be used complementarily or redundantly or in various combined combinations. For example, this is a vision system or systems of the object 3 tag 16 - the object 3 tag reader 4B. Various, non-limiting examples are listed below.

In one embodiment, the device has a vision system comprising one or more cameras acting as sensors 4A and/or 4B, oriented to the exposed area, which in connection with an appropriately programmed microcontroller 5 recognize individual objects and their arrangement. The vision system also detects the interaction of a person/customer with the object. Such vision systems and algorithms for recognizing objects and their arrangement are known in the art.

In another example, it is a system comprising optical sensors acting as sensor 4A and/or 4B, detecting and recognizing markers 16 placed on individual objects or characteristics of individual objects. The marker may be, for example, a barcode or a QR code or the color of the object 3 and/or marker 16.

In another example, this is a system based on radio identification technology implemented so as to detect the positioning of each of the samples individually. In the prior art, radio tags and readers are known that can implement such a system. For example, these may be tags 16 located on the object or objects 3 and RFID readers 4B that can act as sensor(s) 4A and optionally 15.

In another example, it is a system based on sensors 4B and/or 4A detecting and/or measuring selected parameters of the magnetic field, allowing, through appropriate placement of e.g. magnets, for example as a marker 16 in the exhibited objects 3, to individually identify each object 3 and/or its position on the display 1 or detecting displacement, deflection, extension, removal, etc. of the exhibited objects 3.

In another example, it is a system based on measuring the resistance and/or capacitance of circuits of electric or electronic elements attached, e.g. as a marker 16, integrated with or constituting a feature of the exhibited object 3, allowing for individual identification of each object 3 acting as a sensor 4B and/or its position on the display 1 or detecting displacement, deflection, extension, removal, etc. of exhibited objects 3 acting as a sensor 4A.

In another example, it is a system based on measurement or reading from digital or analog circuits placed or attached (as a marker 16) to the exhibited objects 3, e.g. by connecting them to various types of contacts allowing for individual identification of each sample 3 acting as a sensor 4B and/or its position on the display or detecting displacement, deflection, extension, removal, etc. of the exhibited objects acting as a sensor 4A.

In another example, it is a system based on data obtained from mechanical modification of the surface, e.g. the idea of punched cards, allowing individual identification of each sample 3 and/or its position on the display 1, acting as sensor 4B, or detecting displacement, deflection, extension, removal, etc. of exhibited objects, acting as sensor 4A.

In another example, it is a system based on sensors of various types: optical, capacitive, resistive, mechanical reflective, ultrasonic, etc., which can be used individually, interchangeably, complementarily or redundantly, or in various combined combinations, detecting customer interactions with an object, e.g. proximity, distance, touch or gestures; or detecting the movement of exposed objects, e.g. displacement, deflection, extension, removal, etc. of objects.

Optionally, the device may include an auxiliary screen 7, e.g. a touch screen, which may perform additional required functions or interactions with person 2. Similarly, optionally, device 1 may include a microphone 8, through which voice commands from person 2 are received by microcontroller 5. The device may also include a graphic code reader 9, e.g. a barcode or QR code reader. The device may include a reader or a plurality of RFID readers 15 and RFID tags (designated as tag 16) associated with objects 3. The device may also include a gesture sensor 14, which may be used, e.g., to switch the display between the presentation of a visualization and the presentation of additional data such as technical data, product availability data, etc.

Optionally, the device may include a communication module 10 such as wi-fi , a short-range radio module, e.g. Bluetooth^{®} , a longer-range radio module, e.g. GPRS or another Internet or network access module or another data bus. The communication module is connected to a microcontroller 5, which sends data to the outside via this module and receives external data, or enables communication between subsequent displays 1 and/or subsequent types of displays 1 in the modular device.

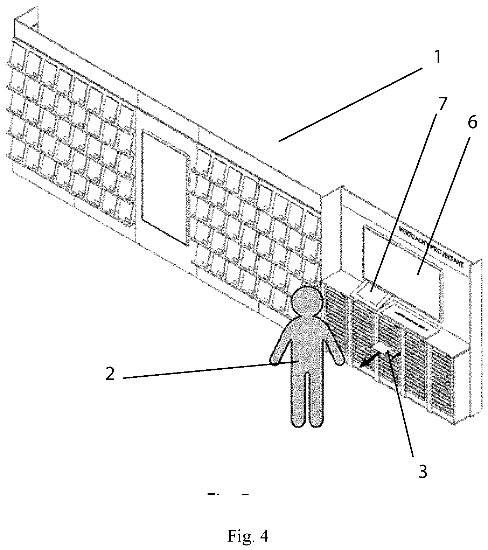

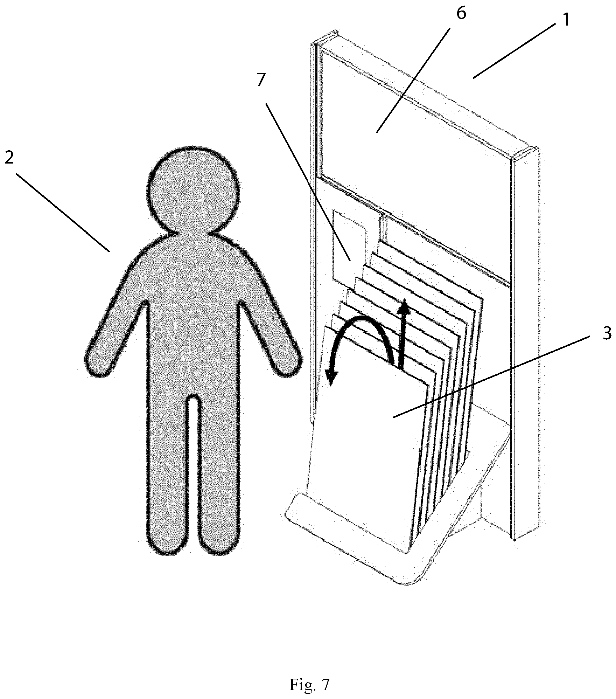

Figs. 4-7 show an exemplary device with a display 1 and various exemplary methods of interaction with a person 2. Fig. 4 shows interaction of a person 2 by means of a drawer-like extension of an object. Sensor 4A recognizes the extension of an object 3, sends information to the control system 5, which then, based on the algorithm 11, sends information to the display screen 6. Fig. 5 shows interaction of a person 2 by means of touching an object 3 located on the shelf of the display 1. The flow of information is analogous. Fig . 6 shows interaction of a person 2 by means of looking at an object 3 located on the shelf of the display 1. Fig. 7 shows interaction by tilting an object 3 from a fan-shaped arrangement of various objects 3. The flow of information is analogous.

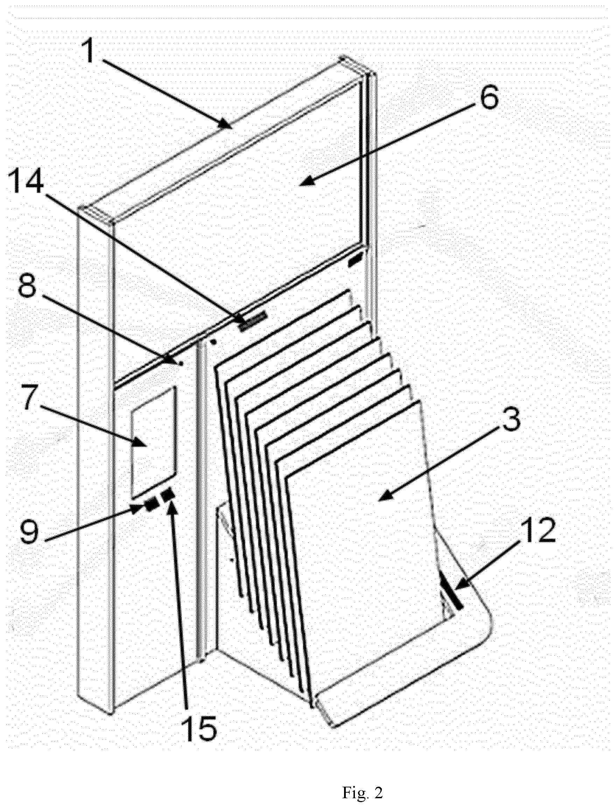

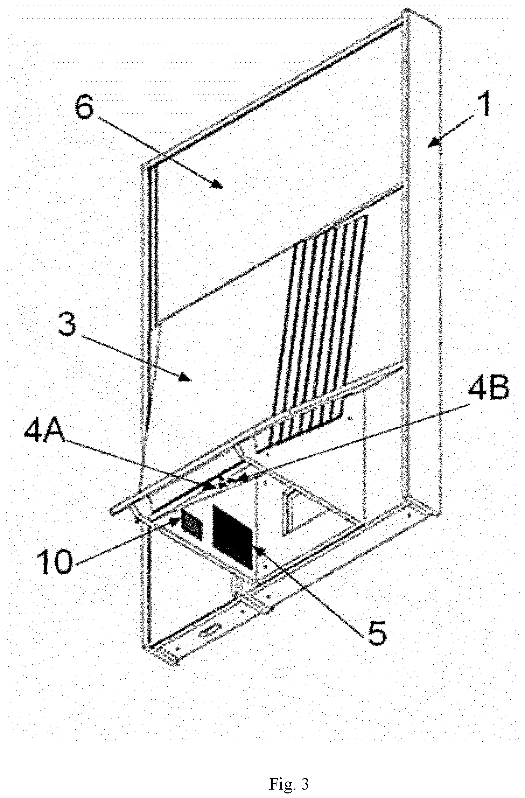

Fig. 2 and 3 show an example arrangement of the device elements. At the top of the display there is a large display 6. Below the display 6 there is a range of objects 3 placed in the display 1. Along the range of objects 3 there is a backlight 12. Below the main display 6 there is an auxiliary display 7, e.g. a touch screen. Below the range of objects 3, inside the display there are a microcontroller 5 and a communication module 10 as well as sensors 4A and 4B. On the display 1 there is also a graphic code reader 9 and an RFID reader 15. Above the range of objects 3 there is a gesture sensor 14.

The device can be implemented as a system of separate displays 1 connected by wire or communicating wirelessly. Such a system can be equipped with one or more common displays 6, creating a modular system.

Within a single display device, there may be many different interaction recognition and/or object recognition systems described above.

The device may be equipped with a vision system for recognizing a person 2, e.g. a customer, containing a camera, software for recognizing persons 2 implemented in the control system 5 and an implemented database containing information about the recognized person 2. The system may create personalized visualizations and information based on the previous activity of a given person. For example, a system for displaying bathroom equipment may consist of separate displays for tiles, fittings, bathroom ceramics or furniture. If the system detects a person's interest in individual objects 3, then at the next display the visualizations and information displayed on the display 6 will be adapted to the person based on previously collected data. For example, if a given person selected tiles in the first step and in the next step views fittings, then the display with fittings may automatically display a visualization of the currently viewed fittings in the bathroom visualization containing previously selected tiles.

The device operates as described below.

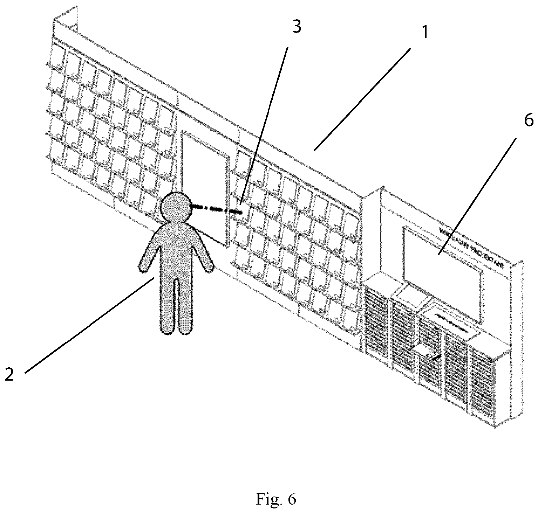

First, person 2 takes action, resulting from his or her interest in the sample or pattern of the exhibited object 3, depending on the implementation of exhibit 1, consisting, for example, of:
- sliding or removing the sample (Fig. 4),
- tilting or removing the sample (Fig. 7),
- touch or pull out the sample (Fig. 5),
- visual fixation (Fig.6)

Sensors 4A and 4B placed in the area of the exhibited samples or a vision system (not shown in the drawing) placed in a place enabling observation of the area of exhibited objects 3 detect which object 3 is the object of interest of the person 2. The order of arrangement of the samples is irrelevant, because the sensors described above recognize the position of the objects on the display. Information from sensors 4A and 4B or the vision system, which object, e.g. the sample, is the object of interest of the person, is transferred to the control system 5 being a microcontroller and/or computer and/or logical unit. A distributed system may be used, where auxiliary control systems occur between the main control system. Information exchange between the control systems may take place both wired and wirelessly.

The control system 5, which comprises a microcontroller or a computer or a logic unit or a distributed control system, can perform the following exemplary tasks or functions on the basis of the programmed algorithm 11 .

Automatically prepares a visualization in the form of a film, photo or animation containing an object 3, the sample of which the customer is interested in, e.g. if display 1 presents floor panels, it prepares a visualization of the room in which the product is placed. The visualization is displayed on one or more displays 6. In other implementations, e.g. where display 1 presents furniture boards, rooms are displayed in which furniture is made of the observed product or its sample. In the case of display 1 containing different types of objects 3 presenting different products, all products that are of interest are changed in the displayed visualization. For example, if a person observes floors, the floors change in the visualization, when observing wall panels, the walls change. The activity is performed automatically. When the person is interested in another object, the visualization is updated accordingly. This functionality plays the role of a "virtual designer" allowing the person to visualize the product in sample implementations or create one visualization from different types of products, e.g. when the display contains different types of products.

Based on information from an optional auxiliary screen 7, e.g. a touch screen, displayed on the display 6, the visualizations can be adapted in an advanced way to the needs of the customer, extending the functionality of the virtual designer software. For example, in the display 1 presenting floors, the person can change the color of the walls, change the room, the floor layout, etc. In the case where a given product appears in the visualization in several applications, each component can be selected separately using the touch screen 7, e.g. in the display 1 containing furniture boards, individual components of the displayed furniture, i.e. individual fronts, countertops, etc. can be changed in the visualization.

The display can be equipped with an optional RFID reader 15, with which a person can add additional products to the visualization, containing appropriate RFID tags, but not necessarily being an object displayed on the display. These can be items from another display or a regular shelf.

The display can be equipped with an optional code reader 9, with which a person can add additional products to the visualization, containing appropriate graphic markers, but not necessarily being an object displayed on the display. These can be items from another display or a regular shelf.

Optionally, the information from the touch screen 7 may be replaced or supplemented by using the microphone 8, then the microcontroller 5, using appropriate software 11, processes and recognizes the person's voice commands, facilitating the use of the "virtual designer" software functionality described earlier.

Optionally, the information from the touch screen 7 may be replaced or supplemented by use of the gesture sensor 14, whereupon the microcontroller 5 processes and recognizes the person's gestures, facilitating the use of the "virtual designer" functionality described earlier.

Information from the touch screen 7 and/or the microphone 8 and/or the gesture sensor 14 may be used for the functionality of a virtual salesperson or an external sales system, by enabling the customer to transfer products selected by the customer, e.g. to a salesperson in a store, a website, send an e-mail notification, or make a direct purchase.

Information from the screen 7 and/or the microphone 8 and/or the gesture sensor 14 may be used to switch between the visualization of the exemplary implementation and information regarding the observed object, for example technical data, price, availability, promotions, etc., or another form of product visualization or e.g. assembly instructions.

Information from the screen 7 and/or the microphone 8 and/or the optional graphic code reader 9 may be used to enter additional information enabling, for example, the addition of the customer's room to the visualization generated by the virtual designer software 11.

Information collected from the customer interfaces, i.e. from the screen 7, microphone 8, gesture sensor 14, etc. may be processed by the control system 5 and software 11 and sent to the system illuminating individual objects 3, enabling the highlighting of selected products that meet the criteria desired by the person or are intended to attract the person's attention, e.g. by illuminating 12. The illuminating 12 may be implemented in various colours.

Information from the optional motion sensors 14, presence sensors 15 , and other object interest sensors 3 is processed to create advanced interest statistics.

The control system 5, via an optional communication module 10, can transmit and receive information from the outside 13, including via the Internet, enabling, for example, updating of graphics and displayed information, sending of reports, statistics or diagnostic data, making payment transactions, or sending of data selected by the customer concerning observed products.

The control system 5, via an optional communication module 10, can transmit and receive information from other displays, e.g. to enable its expansion or to increase the scope of its functionality or to create a comprehensive system.

The invention finds application in the production of furniture, displays, advertising materials, points of sale and in the broadly understood trade, marketing and merchandising .

### List of references

- 1.: Display stand
- 2.: Person/ client
- 3.: Object
- 4A.: Sensor detecting customer interaction with exhibited objects
- 4B.: Object recognition sensor

- 5.: Control system
- 6.: Display / Screen
- 7.: Auxiliary screen
- 8.: Microphone
- 9.: Graphic code reader
- 10.: Communication module
- 11.: Software / Algorithm
- 12.: Backlight
- 13.: External computer
- 14.: Gesture sensor
- 15.: RFID reader
- 16.: Object tag

## Claims

1. A device for presenting and visualizing objects, comprising: at least one display (1) designed to accommodate one or more objects (3); at least one control system (5) comprising a microcontroller and/or a computer and/or a logic unit with implemented software (11), to which at least one sensor (4A) for interaction of a customer with the displayed objects (3) is connected; and at least one display (6), **characterized in that** it comprises a system for detecting the presence and position of objects (3) in the display (1) comprising a system: marker (16) - sensor (4B, 4A) which is connected to the control system (5) for recognizing the object (3) and/or a sensor (4B, 4A) recognizing characteristic features of the object (3) and/or a vision system comprising a camera or cameras oriented towards the display (1) containing the objects (3).

2. A device according to claim 1, **characterized in that** the sensors (4A) also perform the function of a sensor (4B) recognizing characteristic features of the object (3), then there is no sensor (4B) in the system.

3. A device according to claim 1 or 2, **characterized in that** the control system (5) comprises implemented software for analyzing the customer's interest and/or visualizing information about or related to one or more objects (3) indicated by the sensor (4A) detecting the customer's interaction with the exhibited objects and/or the object (3) - sensor (4B) system recognizing the object, and for displaying this information on one or more displays (6).

4. A device according to claim 1 or 2 or 3, **characterized in that** it additionally comprises a system for visual recognition of a person (2) in the vicinity of the display (1) comprising a camera and software for visual recognition of a person implemented in the control system (5), wherein the software contains a database structure of information related to the recognized person (2).

5. A device according to any one of claims 1 to 4, **characterized in that** it further comprises an auxiliary touch screen (7) connected to the control system (5) and/or a microphone (8) connected to the control system (5) and/or a communication module (10) connected to the control system (5).

6. A device according to any one of claims 1 to 5, **characterized in that** it comprises a backlight (12) for the object (3) or for pointing to the object (3) connected to the control system (5).

7. A device according to any one of claims 1 to 6, **characterized in that** the object (3) marker (16) - object recognition sensor (4B) arrangement is implemented by a visual code placed on the object (3) and an optical code reader (4B) and/or an additional reader (9) placed on the display (1).

8. A device according to any one of claims 1 to 7, **characterized in that** the object (3) - sensor (4B) system recognizing the object is implemented by a radio tag (16) placed on the object (3) and a radio reader (4B) and/or an additional reader (15) of the tag (16) placed on or in the display (1).

9. A device according to any one of claims 1 to 8, **characterized in that** the object (3) - sensor (4B) system recognizing the object is implemented by a magnetic marker (16) placed on the object (3) and a sensor or a magnetic field meter placed on or in the display.

10. A device according to any one of claims 1 to 9, **characterized in that** the object (3) - sensor (4B) system recognizing the object is implemented by a color sensor placed on or in the display.

11. A device according to any one of claims 1 to 10, **characterized in that** the object (3)-sensor (4B) system recognizing the object is implemented by a digital or analog circuit comprising contacts placed on the object (3) and on or in the display connected to the sensor (4B).

12. A method of presenting and visualizing objects and obtaining data on customer behavior and preferences, carried out by means of a device for presenting and visualizing objects, comprising: at least one display (1) intended for placing one or more objects (3) on it; at least one control system (5) comprising a microcontroller and/or a microcontroller and/or a logic unit with implemented software (11), to which at least one sensor (4A) detecting customer interaction with the exhibited objects (3) is connected, and at least one display (6), **characterized in that**
- the device comprises a system for detecting the presence and position of objects (3) in the display (1) implemented by an object (3) - sensor (4B) system connected to the control system (5) that recognizes the object (3) and/or a sensor (4B, 4A) that recognizes characteristic features of the object (3) and/or a vision system comprising a camera or cameras oriented towards the display (1) containing objects (3), and **in that** the method comprises the following steps:
a) placing one or more objects (3) on one or more displays (1),
b) detecting at least one interaction of a person (2) with an object (3),
c) transferring information about the interactions of the person (2) with the object (3) to the control system (5),
d) processing information about the interactions of the person (2) with the object (3) in the control system (5) by the software (11),
e) visualization of processed information on the display (6),
f) saving information about the interactions of a person (2) with an object (3) in the database,
and optionally comprises a step:
g) processing and saving information about the choices of the person (2) in the database and sending it to the external sales system.

13. The method according to claim 12, **characterized in that** it is performed by a device that additionally comprises a visual person recognition system (2) comprising a camera and vision recognition software implemented in a control system (5), the software comprising a database of information associated with the recognized person (2) and comprising the steps of:
b1) recognition of a person (2) approaching the display (1),
d1) processing of information about the person (2) and his/her interaction with the object (3) in the control system (5) by software (11),
f1) saving information about the person (2) and their interaction with the object (3) in the database,

14. The method according to claim 12 or 13, **characterized in that** it is carried out by a device which comprises a touch-sensitive auxiliary screen (7) and/or a microphone (8) and comprises the following steps:
b2) detecting additional interaction of the person (3) with the auxiliary screen (7) and/or microphone (8),
c1) transferring information about the interaction of the person (3) to the control system (5),
d2) processing information about the interactions of the person (2) with the auxiliary screen (7) and/or the microphone (8) in the control system (5) by means of software (11),
e1) visualization of processed information on the display (6),
e2) visualization of processed information on the touch screen display (7).

15. The method according to claims 12 to 14, **characterized in that** it is carried out by a device that includes a system for illuminating or indicating exposed objects, further comprising the following step:
e3) based on the processed information, highlighting or indicating appropriate objects.
